# FASCICULE DE BREVET EUROPEEN

(11) **EP 1 825 298 B1**
(45) Date de publication et mention de la délivrance du brevet: **23.03.2011**
(21) Numéro de dépôt: 05857331.2
(22) Date de dépôt: 12.12.2005
(51) Int. Cl.: G01T 1/164

(54) **DISPOSITIF D'IMAGERIE GAMMA AMELIORE**
VERBESSERTE GAMMA-BILDERZEUGUNGSVORRICHTUNG
IMPROVED GAMMA IMAGING DEVICE

(30) Priorité: 14.12.2004 FR 0452962
(43) Date de publication de la demande: 29.08.2007
(73) Titulaire: Commissariat à l'Énergie Atomique et aux Énergies Alternatives, 75015 Paris (FR)
(72) Inventeur: LE GOALLER, Christophe, F-30400 Villeneuve les Avignon (FR)
(74) Mandataire: Poulin, Gérard
(86) Numéro de dépôt international: PCT/FR2005/051072
(87) Numéro de publication internationale: WO 2006/090035

(56) Documents cités:
- EP-A- 0 542 561
- EP-A- 0 743 538
- US-B1- 6 495 834
- US-B1- 6 815 687

## Description

### DOMAINE TECHNIQUE

La présente invention est relative à un dispositif d'imagerie gamma amélioré.

### ÉTAT DE LA TECHNIQUE ANTÉRIEURE

Depuis les années 1990 il a été développé des dispositifs d'imagerie gamma qui permettent de localiser à distance des sources radioactives irradiantes gamma, c'est-à-dire émettant un rayonnement gamma. Ces dispositifs d'imagerie gamma comportent une gamma caméra.

Le principe de fonctionnement d'une gamma caméra est bien connu: un scintillateur reçoit des photons gamma en provenance de la source irradiante gamma, il fournit un signal lumineux qui est amplifié et détecté généralement par un dispositif à couplage de charge (CCD charge coupled device en anglais) associé à des moyens de traitement. Le dispositif à couplage de charge permet de positionner le rayonnement gamma émis par la source irradiante gamma et ayant interagi avec le scintillateur. De telles gamma caméras sont relativement sensibles et performantes.

On superpose généralement deux images, l'image de la source irradiante gamma correspondant au rayonnement gamma reçu par la gamma caméra à une image visible de la scène observée acquise soit par la gamma caméra elle-même, soit par une caméra couleur associée à la gamma caméra. L'image du rayonnement gamma reçu par le scintillateur apparaît généralement avec de fausses couleurs. L'image visible de la scène observée lorsqu'elle est acquise par la gamma caméra est en noir et blanc.

Le document EP 0 542 561 A1 décrit un dispositif d'imagerie gamma comportant un détecteur gamma ainsi qu'un pointeur laser et une caméra vidéo de façon à diriger le détecteur gamma vers un point identifié par la caméra vidéo.

Le document EP C 743 538 A2 décrit un dispositif d'imagerie gamma comportant une gamma caméra à sténopé couplée à une caméra optique.

Le document US 6815687 décrit un dispositif d'imagerie gamma comportant une gamma caméra du type caméra d'Anger reliée de façon dynamique à un détecteur de spectrométrie gamma, mesurant un point donné en alternance.

De tels dispositifs d'imagerie gamma permettent de positionner des sources irradiantes gamma dans l'espace, ce qui les rend particulièrement adaptés à la préparation d'interventions en milieu irradiant telles que des opérations de maintenance, de démantèlement ou d'inspections.

En outre, certains de ces dispositifs d'imagerie gamma permettent la quantification de débit de dose grâce à una analyse d'image, moyennant certaines hypothèses concernant notamment l'énergie du rayonnement gamma incident.

Par contre, si l'on désire identifier et quantifier les radioéléments responsables de l'irradiation gamma, il faut disposer d'un appareil de spectrométrie qui permet de mesurer l'énergie des photons gamma émis et d'en comptabiliser le nombre pendant une certaine durée. Cet appareil de spectrométrie et le dispositif d'imagerie ne sont généralement pas employés simultanément dans le temps. De plus on n'est jamais sûr que lors d'utilisation successives ou simultanées qu'ils visent exactement le même lieu ce, qui fait que les deux séries de mesures ne sont pas corrélées. On ne sait donc pas lors de la mesure de spectrométrie si l'on a recueilli l'énergie des mêmes radioéléments que ceux qui ont été localisés par le dispositif d'imagerie. Les conclusions tirées de ces mesures risquent de ne pas s'avére= exactes.

### EXPOSÉ DE L'INVENTION

La présente invention a pour but de remédier aux inconvénient de l'art antérieur.

Plus précisément, la présente invention a pour but de proposer un dispositif d'imagerie gamma destiné à localiser à distance une source irradiante gamma et susceptible de caractériser des radioéléments responsables du rayonnement gamma émis par la source irradiante gamma de manière à améliorer la précision des mesures effectuées.

Pour y parvenir la présente invention concerne un dispositif d'imagerie gamma tel que défini dans la revendication 1. Il comporte une gamma caméra ayant un champ d'observation qui s'étend autour d'un axe. Il comporte de plus:
- un détecteur de spectrométrie gamma collimaté avec un collimateur ayant un champ d'observation s'étendant autour d'un axe et qui est inclus dans le champ d'observation de la gamma caméra au-delà d'une distance donnée de celle-ci,
- un pointeur laser, ayant un axe de visée, ce pointeur laser étant situé à proximité du collimateur de spectrométrie gamma de sorte que l'axe de visée soit parallèle à l'axe du champ d'observation du collimateur et soit sécant avec le champ d'observation du collimateur,
- des moyens de détection d'une zone pointée par le pointeur laser.

Pour améliorer la précision de la caractérisation, il est préférable que le pointeur laser soit solidaire du collimateur de spectrométrie gamma.

Il est même possible que le pointeur laser soit inclus dans le collimateur de spectrométrie gamma.

Le pointeur laser peut émettre dans un domaine visible ou proche du visible.

Les moyens de détection de la zone pointée par le pointeur laser peuvent être réalisés par la gamma caméra.

Il est possible que les moyens de détection de la zone pointée par le pointeur laser soient réalisés par une caméra additionnelle, le pointeur laser émettant un rayonnement auquel est sensible la caméra additionnelle. Cette construction correspond par exemple au cas où la gamma caméra est une caméra à masque codé.

La caméra additionnelle possède un champ d'observation proche du champ d'observation de la gamma caméra.

De préférence le champ d'observation du collimateur est restreint pour améliorer la sélectivité, il représente entre environ un dixième et un quart du champ d'observation de la gamma caméra.

La gamma caméra peut être une caméra à sténopé ou à masque codé.

Dans un but de faciliter le montage du dispositif, le champ d'observation de la gamma caméra peut s'étendre autour d'un axe qui est sensiblement parallèle à l'axe du champ d'observation du collimateur de spectrométrie gamma et à l'axe de visée du pointeur laser.

En présence de la caméra additionnelle, son champ d'observation peut s'étendre autour d'un axe qui est sensiblement parallèle à l'axe du champ d'observation du collimateur de spectrométrie gamma et à l'axe de visée du pointeur laser.

Il est préférable de réaliser le collimateur dans un matériau ayant une densité supérieure à celle de l'acier.

Pour limiter l'encombrement du dispositif, il préférable que le détecteur de spectrométrie gamma soit aussi compact que possible.

La distance donnée est de préférence de l'ordre du mètre.

La présente invention concerne également un procédé de mise en oeuvre du dispositif d'imagerie gamma ainsi caractérisé.

Il consiste à :
localiser une source irradiante gamma avec la gamma caméra, cette source émettant un rayonnement gamma ayant un spectre d'énergie,
orienter le dispositif d'imagerie de manière à ce que le pointeur laser désigne une zone qui correspond à la source irradiante gamma ou à une partie de la source irradiante gamma,
vérifier que l'orientation est correcte grâce à une vue de la zone désignée par le pointeur laser prise par les moyens de détection,
acquérir à l'aide du détecteur de spectrométrie gamma le spectre d'énergie du rayonnement gamma émis par la source irradiante gamma ainsi localisée.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 montre en coupe longitudinale un exemple de dispositif d'imagerie gamma selon l'invention ;
- la figure 2 montre dans l'espace un autre exemple de dispositif d'imagerie gamma selon l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

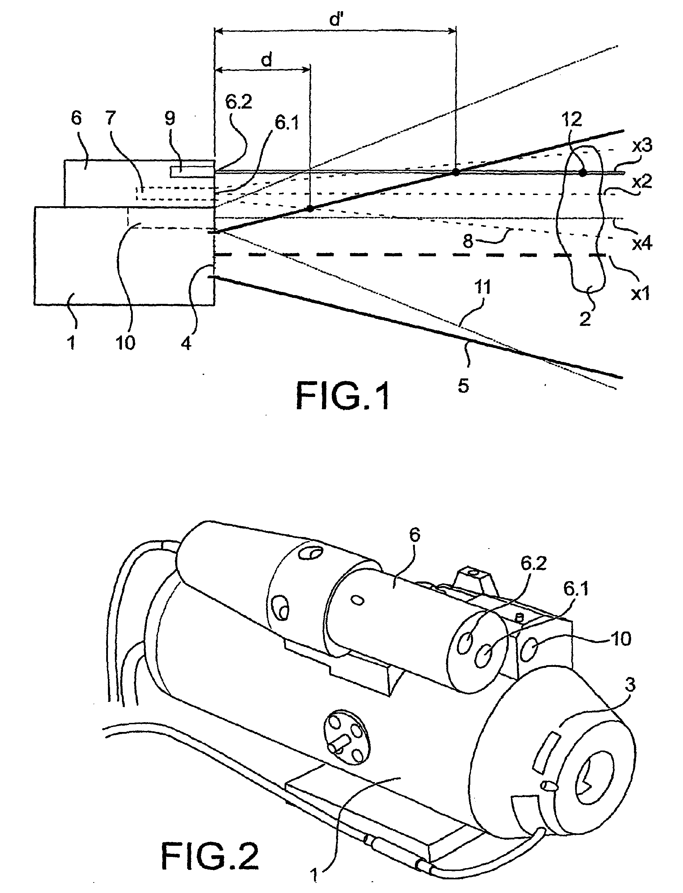

On va maintenant se référer à la figure 1 qui montre, en coupe longitudinale, un exemple de dispositif d'imagerie gamma perfectionné conforme à l'invention et à la figure 2 qui montre dans l'espace un autre exemple de dispositif d'imagerie gamma perfectionné conforme à l'invention.

Le dispositif d'imagerie gamma comporte une gamma caméra 1. Elle est destinée à localiser des sources irradiantes gamma. L'une d'elles est référencée 2 sur la figure 1.

Cette gamma caméra 1 peut être de type quelconque par exemple avec un collimateur 3 de type sténopé comme schématisé sur la figure 2 pour collecter des photons gamma en provenance de la source irradiante gamma 2. En variante, elle pourrait disposer d'une collimation des photons gamma par une ouverture 4 à masque codé comme schématisé sur la figure 1.

La gamma caméra 1 possède un champ d'observation 5 s'étendant autour d'un axe x1. Cette gamma caméra 1 peut être susceptible, dans la variante sans masque codé, d'acquérir une image visible de scènes qui se trouvent dans son champ d'observation 5 et donc de la source irradiante gamma 2. Cette image est une image monochrome (en noir et blanc).

Le dispositif d'imagerie comporte de plus un collimateur de spectrométrie gamma 6 et dans lequel est placé un détecteur de spectrométrie gamma 7. Le collimateur de spectrométrie gamma 6 est réalisé en matériau dense, sa densité sera supérieure à celle de l'acier. Ce matériau peut par exemple être réalisé à base de plomb et/ou de tungstène et/ou de cuivre. Le collimateur 6 est solidaire de la gamma caméra 1.

Le collimateur de spectrométrie gamma 6 possède, à partir d'une ouverture 6.1, un champ d'observation 8 qui est inclus dans le champ d'observation 5 de la gamma caméra 1 au-delà d'une distance donnée d de la gamma caméra 1. La distance d est de l'ordre du mètre.

Le détecteur de spectrométrie gamma 7 se trouve face à l'ouverture 6.1 du collimateur de spectrométrie gamma 6.

Le champ d'observation 8 du collimateur de spectrométrie gamma 6 s'étend autour d'un axe x2. De manière avantageuse car simple à réaliser, il est préférable que l'axe x2 du champ d'observation 8 du collimateur de spectrométrie gamma 6 soit sensiblement parallèle à l'axe x1 du champ d'observation 5 de la gamma caméra 1. Pour des raisons de sélectivité, il est préférable que le champ d'observation 8 du collimateur de spectrométrie gamma 6 soit restreint par rapport au champ d'observation 5 de la gamma caméra 1. Le champ d'observation 8 du collimateur de spectrométrie gamma 6 pourra être compris par exemple entre environ un dixième et un quart du champ d'observation 5 de la gamma caméra 1.

De préférence le détecteur de spectrométrie gamma 7 est aussi compact que possible pour que le dispositif d'imagerie selon l'invention reste le plus compact possible.

Les détecteurs de spectrométrie gamma sont des appareils bien connus et ils possèdent une partie active avec laquelle interagissent des photons gamma lors de la détection. Cette partie active peut être réalisée à base de cristaux scintillateurs tels que par exemple de l'iodure de sodium dopé au thallium ou à base de semi-conducteurs tels que par exemple du CdZnTe. Le recours à des détecteurs de spectrométrie gamma compacts à base de CdZnTe s'avère généralement très satisfaisant. Le détecteur de spectrométrie gamma est destiné à coopérer avec des moyens de traitement (non représentés) de signaux délivrés par le détecteur de spectrométrie gamma.

Le dispositif d'imagerie gamma objet de l'invention comporte également un pointeur laser 9. Ce pointeur laser 9 est localisé à proximité du détecteur de spectrométrie gamma 7. Il est couplé avec le collimateur de spectrométrie gamma 6. Il peut être placé à l'intérieur du collimateur de spectrométrie gamma 6 ou à l'extérieur.

Le pointeur laser 9 peut être solidaire de la gamma caméra 1 directement. En variante, il pourrait être solidaire du collimateur de spectrométrie gamma 6..

Lorsque le collimateur de spectrométrie gamma 6 loge le pointeur laser 9, il comporte une seconde ouverture 6.2 face à laquelle se trouve le pointeur laser 9. Le pointeur laser 9 a un axe de visée x3 qui doit être parallèle à l'axe x2 du champ d'observation 8 du collimateur de spectrométrie gamma 6. Les caractéristiques de proximité entre le détecteur de spectrométrie gamma 7 et le pointeur laser 9 et de parallélisme entre l'axe de visée x3 et l'axe x2 du champ d'observation 8 du collimateur de spectrométrie gamma 6 sont requises pour un fonctionnement optimal du dispositif d'imagerie gamma selon l'invention.

Ainsi, à une distance d'donnée du pointeur laser 9, l'axe de visée x3 du pointeur laser 9 est sécant avec le champ d'observation 8 du collimateur de spectrométrie gamma 6. Cette distance d' peut être différente de la distance d. Cette distance d' est typiquement supérieure à environ 1 mètre. De la sorte, l'axe de visée x3 du pointeur laser 9 est également sécant avec le champ d'observation 5 de la gamma caméra 1.

On prévoit également dans le dispositif d'imagerie gamma objet de l'invention, des moyens de détection 1, 10 aptes à détecter une zone 12 pointée par le pointeur laser 9. Le pointeur laser 9 a une longueur d'onde qui est compatible avec les dits moyens de détection 1,10. Ces moyens de détection 1, 10 peuvent être matérialisés par la gamma caméra 1 elle-même. On a vu précédemment que certaines gamma caméras disposaient d'une fonction de prise de vue d'images visibles ou proches du visible. Les images prises par ces caméras sont en noir et blanc mais cela ne pose pas de problème.

En variante, les moyens de détection 1, 10 peuvent être réalisés par une caméra additionnelle 10 qui est une caméra visible ou proche du visible (par exemple une caméra infrarouge). Cette caméra additionnelle 10 possède un champ de d'observation 11 s'étendant autour d'un axe x4. La caméra additionnelle 10 est solidaire de la gamma caméra 1 de manière à ce que leurs champ d'observation 5, 11 soient proches l'un dans l'autre. La caméra additionnelle 10 a été représentée sur la figure 2 accolée au collimateur de spectrométrie gamma 6. On choisira avantageusement pour le pointeur laser 9 une longueur d'onde dans le visible ou proche du visible. On précise de nouveau que les gamma caméras à masque codé ne peuvent pas fournir d'images visibles et c'est dans ce cas que la caméra additionnelle 10 prendra toute son importance.

Le pointeur laser 9 va pointer une zone 12 de la source irradiante 2. Cette zone 12 va être détectée par les moyens de détection 1, 10, c'est-à-dire la gamma caméra 1 et/ou par la caméra additionnelle 10 en étant située dans leurs champs d'observation 5, 11 respectifs. Si c'est la gamma caméra 1 qui détecte la zone 12 désignée par le pointeur laser 9, il faut bien entendu que l'axe de visée x3 du pointeur laser 9 soit sécant avec le champ d'observation 5 de la gamma caméra 1. Dans ce cas l'image de la zone 12 acquise par la gamma caméra n'est pas une image en couleur mais en noir et blanc. Cela ne pose aucun problème car la luminosité produite par le pointeur laser 9 permet une visualisation sans ambiguïté de la zone 12. Si c'est la caméra additionnelle 10 qui détecte la zone 12 pointée par le pointeur laser 9, il faut que l'axe de visée x3 soit sécant avec le champ d'observation 11 de la caméra additionnelle 10.

Une construction avantageuse et particulièrement simple à réaliser est de rendre les axes x1, x2, x4 des champs d'observation 5, 8, 11 de la gamma caméra 1, du collimateur de spectrométrie gamma 6 et de la caméra additionnelle 10 (si elle est présente) parallèles entre eux et parallèles à l'axe de visée x3 du pointeur laser 9. Cette configuration est illustrée sur les figures 1 et 2.

On va maintenant décrire le procédé de mise en ouvre du dispositif d'imagerie gamma de l'invention.

On localise une source irradiante gamma 2 avec la gamma caméra 1. On oriente le dispositif d'imagerie de manière à ce que le pointeur laser 9 désigne une zone 12 qui correspond à la source irradiante gamma 2 ou à une partie de la source irradiante gamma s'il s'agit d'une source étendue.

On vérifie que l'orientation du pointeur laser 9 est correcte grâce à une vue de la zone 12 désignée par le pointeur laser prise par les moyens de détection 1, 10.

Si les conditions de proximité du pointeur laser 9 et du collimateur de spectrométrie gamma 6 et de parallélisme entre leurs axes x2, x3 sont respectées alors la source irradiante gamma 2 ou une partie de cette source est située dans le champ d'observation 8 du collimateur de spectrométrie gamma 6.

On acquiert alors à l'aide du détecteur de spectrométrie gamma 7 le spectre d'énergie du rayonnement gamma émis par la source irradiante gamma 2 ainsi localisée. Le détecteur de spectrométrie gamma 7 délivre un courant en impulsions dont l'amplitude est proportionnelle à l'énergie qu'il a absorbé c'est-à-dire à l'énergie des photons gammas qu'il a reçu de la source irradiante. Ces impulsions sont traitées en fonction de leur amplitude dans des moyens de traitement de type analyseur multicanal. Le résultat est un spectre en énergie avec des pics photoélectriques traduisant le nombre d'impulsions en fonction de l'énergie du rayonnement gamma.

suivant les principes communément établis en spectrométrie, l'analyse des pics photoélectriques obtenus sur le spectre permet d'identifier les principaux radioéléments émetteurs de photons gamma responsables de l'irradiation.

Le lien entre l'information spatiale, c'est-à-dire la position de la zone localisée sur la source irradiante gamma à localiser et à identifier et l'information spectrale, c'est-à-dire le spectre en énergie du rayonnement gamma émis par la source est assuré par le pointeur laser 9. Ce dernier permet de guider le déplacement du dispositif d'imagerie gamma de l'invention et de s'assurer que le collimateur de spectrométrie gamma «observe» bien la source irradiante gamma 2 localisée par la gamma caméra.

L'imagerie gamma apporte également une information sur l'étendue de la source irradiante gamma, cette information peut être utilisée lors de l'interprétation du spectre en énergie, en particulier lorsque l'on souhaite évaluer l'activité de la source.

L'association de l'imagerie gamma et de la spectrométrie gamma au sein du dispositif apporte deux avantages. Premièrement les résultats fournis par l'imagerie gamma indiquent les sources les plus irradiantes dans un environnement qu'il est souhaitable de caractériser par spectrométrie gamma. Deuxièmement, l'imagerie gamma apporte une information sur l'étendue de la zone irradiante pouvant être prise en compte lors du dépouillement de la mesure réalisée par spectrométrie gamma, en particulier lorsque l'on souhaite évaluer l'activité de la source irradiante à partir du spectre en énergie mesurée. Cette évaluation suppose que des hypothèses soient prises quant à la distribution spatiale de la source irradiante, information donnée par l'imagerie gamma.

Bien que plusieurs modes de réalisation de la présente invention aient été représentés et décrits de façon détaillée, on comprendra que différents changements et modifications puissent être apportés sans sortir du cadre de l'invention.

## Revendications

1. Dispositif d'imagerie gamma comportant une gamma caméra (1) ayant un champ d'observation (5) un détecteur de spectrométrie gamma collimaté (7) avec un collimateur (6) avant un champ d'observation (8) s'étendant autour d'un axe (x2) et qui est inclus le champ d'observation (5) de la gamma caméra (1), au-delà d'une distance donnée (d) de celle-ci, **caractérisé en ce qu'**il comporte de plus:
- un pointeur laser (9), ayant un axe de visée (x3), ce pointeur laser (9) étant situé à proximité du collimateur de spectrométrie gamma (6) de sorte que l'axe de visée (x3) soit parallèle à l'axe (x2) du champ d'observation (8) du collimateur (6) et soit sécant avec le champ d'observation (8) du collimateur (6),
- des moyens de détection (1, 10) d'une zone (12) pointée par le pointeur laser (9), matérialisés par la gamma caméra (1) ou solidaires de ladite gamma caméra (1),
et **en ce que** la gamma caméra (1) est une caméra à sténopé ou à masque codé.

2. Dispositif d'imagerie gamma selon la revendication 1, dans lequel le pointeur laser (9) est solidaire du collimateur de spectrométrie gamma (6).

3. Dispositif d'imagerie gamma selon l'une des revendications 1 ou 2, dans lequel le pointeur laser (9) est inclus dans le collimateur de spectrométrie gamma (6).

4. Dispositif d'imagerie gamma selon l'une des revendications 1 à 3, dans lequel le pointeur laser (9) émet dans un domaine visible ou proche du visible.

5. Dispositif d'imagerie gamma selon l'une des revendications 1 à 4, dans lequel les moyens de détection de la zone (12) pointée par le pointeur laser (9) sont réalisés par la gamma caméra (1).

6. Dispositif d'imagerie gamma selon l'une des revendications 1 à 4, dans lequel les moyens de détection de la zone (12) pointée.par le pointeur laser (9) sont réalisés par une caméra additionnelle (10), le pointeur laser (9) émettant un rayonnement auquel est sensible la caméra additionnelle (10).

7. Dispositif d'imagerie gamma selon la revendication 6, dans lequel la caméra additionnelle (10) possède un champ d'observation (11) proche du champ d'observation (5) de la gamma caméra (1).

8. Dispositif d'imagerie gamma selon l'une des revendications 1 à 7, dans lequel le champ d'observation (8) du collimateur représente entre environ un dixième et un quart du champ d'observation (5) de la gamma caméra (1).

9. Dispositif d'imagerie gamma selon l'une des revendications 1 à 8, dans lequel le champ d'observation (5) de la gamma caméra (1) s'étend autour d'un axe (x1) qui est sensiblement parallèle à l'axe (x2) du champ d'observation (8) du collimateur de spectrométrie gamma (6) et à l'axe de visée (x3) du pointeur laser (9).

10. Dispositif d'imagerie gamma selon l'une des revendications 7 à 9, dans lequel le champ d'observation (11) de la caméra additionnelle (10) s'étend autour d'un axe (x4) qui est sensiblement parallèle à l'axe (x2) du champ d'observation (8) du collimateur de spectrométrie gamma (6) et à l'axe de visée (x3) du pointeur laser (9).

11. Dispositif d'imagerie gamma selon l'une des revendications 1 à 10, dans lequel le collimateur (6) est réalisé dans un matériau ayant une densité supérieure à celle de l'acier.

12. Dispositif d'imagerie gamma selon l'une des revendications 1 à 11, dans lequel le détecteur de spectrométrie gamma (7) est aussi compact que possible.

13. Dispositif d'imagerie gamma selon l'une des revendications 1 à 12, dans lequel la distance donnée (d) est de l'ordre du mètre.

14. Procédé de mise en oeuvre du dispositif d'imagerie gamma selon l'une des revendications 1 à 13, **caractérisé en ce qu'**il consiste à :
localiser une source irradiante gamma (2) avec la gamma caméra (1), cette source émettant un rayonnement gamma ayant un spectre d'énergie,
orienter le dispositif d'imagerie de manière à ce que le pointeur laser (9) désigne une zone (12) qui correspond à la source irradiante gamma 2 ou à une partie de la source irradiante gamma,
vérifier que l'orientation est correcte grâce à une vue de la zone (12) désignée par le pointeur laser (9) prise par les moyens de détection (1, 10) ;
acquérir à l'aide du détecteur de spectrométrie gamma (7) le spectre d'énergie du rayonnement gamma émis par la source irradiante gamma (2) ainsi localisée.

## Claims

1. Gamma imagery device including a gamma camera (1) with an observation field (5),
- a gamma spectrometry detector (7) collimated with a collimator (6) with an observation field (8) extending around an axis (x2) and that is included in the observation field (5) of the gamma camera (1) beyond a given distance (d) from it, **characterised in that** it further includes:
- a laser pointer (9) with a line of sight (x3), this laser pointer (9) being located close to the gamma spectrometry collimator (6), such that the line of sight (x3) is parallel to the axis (x2) of the observation field (8) of the collimator (6) and intersects the observation field (8) of the collimator (6),
- means (1, 10) of detecting a zone (12) pointed at by the laser pointer (9), materialised by the gamma camera (1) or fixed to the gamma camera (1),
and **in that** the gamma camera (1) is a pinhole camera or a coded mask camera.

2. Gamma imagery device according to claim 1, in which the laser pointer (9) is fixed to the gamma spectrometry collimator (6).

3. Gamma imagery device according to either claim 1 or 2, in which the laser pointer (9) is included in the gamma spectrometry collimator (6).

4. Gamma imagery device according to any one of claims 1 to 3, in which the laser pointer (9) emits in a visible or near visible range.

5. Gamma imagery device according to one of claims 1 to 4, in which means of detecting the zone (12) pointed at by the laser pointer (9) are formed by the gamma camera (1).

6. Gamma imagery device according to any one of claims 1 to 4, in which means of detecting the zone (12) pointed at by the laser pointer (9) are formed by an additional camera (10), the laser pointer (9) emitting radiation to which the additional camera (10) is sensitive.

7. Gamma imagery device according to claim 6, in which the additional camera (10) has an observation field (11) similar to the observation field (5) of the gamma camera (1).

8. Gamma imagery device according to one of claims 1 to 7, in which the observation field (8) of the collimator covers between about a tenth and a quarter of the observation field (5) of the gamma camera (1).

9. Gamma imagery device according to one of claims 1 to 8, in which the observation field (5) of the gamma camera (1) extends around an axis (x2) that is substantially parallel to the axis (x2) of the observation field (8) of the gamma spectrometry collimator (6) and to the line of sight (x3) of the laser pointer (9).

10. Gamma imagery device according to one of claims 7 to 9, in which the observation field (11) of the additional camera (10) extends around an axis (x4) that is substantially parallel to the axis (x2) of the observation field (8) of the gamma spectrometry collimator (6) and to the line of sight (x3) of the laser pointer (9).

11. Gamma imagery device according to one of claims 1 to 10, in which the collimator (6) is made of a material with a density greater than the density of steel.

12. Gamma imagery device according to one of claims 1 to 11, in which the gamma spectrometry detector (7) is as compact as possible.

13. Gamma imagery device according to one of claims 1 to 12, in which the distance (d) is of the order of 1 meter.

14. Method of using the gamma imagery device according to one of claims 1 to 13, **characterised in that** it consists of the following steps:
localise a gamma radiation source (2) with the gamma camera (1), this source emitting gamma radiation with an energy spectrum;
orient the imagery device such that the laser pointer (9) points at a zone (12) corresponding to the gamma radiation source (2) or to a part of the gamma radiation source;
check that the orientation is correct, by the detection means (1, 10) taking a photo of the zone (12) pointed at by the laser pointer (9);
acquire the energy spectrum of the gamma radiation emitted by the gamma radiation source (2) thus localised, using the gamma spectrometry detector (7).

## Patentansprüche

1. Gammabildgebungsvorrichtung, umfassend eine Gammakamera (1) mit einem Beobachtungsfeld (5), einem kollimierten Gammaspektrometriedetektor (7) mit einem Kollimator (6) mit einem Beobachtungsfeld (8), welches sich um eine Achse (x2) herum erstreckt und im Beobachtungsfeld (5) der Gammakamera (1) jenseits eines vorgegebenen Abstands (d) von dieser enthalten ist, **dadurch gekennzeichnet, dass** sie ferner umfasst:
- einen Laserpointer (9) mit einer Visierachse (x3), wobei dieser Laserpointer (9) in der Nähe des Gammaspektrometriekollimators (6) derart angeordnet ist, dass die Visierachse (x3) parallel ist zur Achse (x2) des Beobachtungsfelds (8) des Kollimator (6) und das Beobachtungsfeld (8) des Kollimators (6) schneidet,
- Mittel zur Erfassung (1, 10) einer Zone (12), auf die der Laserpointer (9) gerichtet ist, die durch die Gammakamera (1) verkörpert werden oder mit der Gammakamera (1) verbunden sind,
und dass die Gammakamera (1) eine Kamera mit einer Lochblende oder mit einer kodierten Maske ist.

2. Gammabildgebungsvorrichtung nach Anspruch 1, bei der der Laserpointer (9) mit dem Gammaspektrometriekollimator (6) verbunden ist.

3. Gammabildgebungsvorrichtung nach einem der Ansprüche 1 oder 2, bei der der Laserpointer (9) im Gammaspektrometriekollimator (6) entfalten ist.

4. Gammabildgebungsvorrichtung nach einem der Ansprüche 1 bis 3, bei der der Laserpointer (9) in einem sichtbaren Bereich oder nahe dem sichtbaren Bereich emittiert.

5. Gammabildgebungsvorrichtung nach einem der Ansprüche 1 bis 4, bei der die Mittel zur Erfassung der Zone (12), auf die der Laserpointer (9) gerichtet ist, durch die Gammakamera (1) realisiert sind.

6. Gammabildgebungsvorrichtung nach einem der Ansprüche 1 bis 4, bei der die Mittel zur Erfassung der Zone (12), auf die der Laserpointer (9) gerichtet ist, durch eine zusätzliche Kamera (10) realisiert sind, wobei der Laserpointer (9) eine Strahlung emittiert, für die die zusätzliche Kamera (10) empfindlich ist.

7. Gammabildgebungsvorrichtung nach Anspruch 6, bei der die zusätzliche Kamera (10) ein Beobachtungsfeld (11) nahe dem Beobachtungsfeld (5) der Gammakamera (1) besitzt.

8. Gammabildgebungsvorrichtung nach einem der Ansprüche 1 bis 7, bei der das Beobachtungsfeld (8) des Kollimators ungefähr zwischen einem Zehntel und einem Viertel des Beobachtungsfelds (5) der Gammakamera (1) repräsentiert.

9. Gammabildgebungsvorrichtung nach einem der Ansprüche 1 bis 8, bei der das Beobachtungsfeld (5) der Gammakamera (1) sich um eine Achse (x1) herum erstreckt, die im Wesentliche parallel ist zur Achse (x2) des Beobachtungsfelds (8) des Gammaspektrometriekollimators (6) und zur Visierachse (x3) des Laserpointers (9).

10. Gammabildgebungsvorrichtung nach einem der Ansprüche 7 bis 9, bei der das Beobachtungsfeld (11) der zusätzlichen Kamera (10) sich um eine Achse (x4) herum erstreckt, die im Wesentlichen parallel ist zur Achse (x2) des Beobachtungsfelds (8) des Gammaspektrometriekollimators (6) und zur Visierachse (x3) des Laserpointers (9).

11. Gammabildgebungsvorrichtung nach einem der Ansprüche 1 bis 10, bei der der Kollimator (6) aus einem Material hergestellt ist, das eine Dichte besitzt, welche größer als jene von Stahl ist.

12. Gammabildgebungsvorrichtung nach einem der Ansprüche 1 bis 11, bei der der Gammaspektrometriedetektor (7) möglichst kompakt ist.

13. Gammabildgebungsvorrichtung nach einem der Ansprüche 1 bis 12, bei der der vorgegebene Abstand (d) in der Größenordnung eines Meters ist.

14. Verfahren zur Verwendung der Gammabildgebungsvorrichtung nach einem der Ansprüche 1 bis 13, **dadurch gekennzeichnet, dass** es die folgenden Schritte umfasst:
Lokalisieren einer Gammastrahlenquelle (2) mit der Gammakamera (1), wobei diese Quelle eine Gammastrahlung mit einem Energiespektrum emittiert,
Orientieren der Bildgebungsvorrichtung derart, dass der Laserpointer (9) eine Zone (12) bezeichnet, die der Gammastrahlenquelle (2) oder einem Teil der Gammastrahlenquelle entspricht,
überprüfen, dass die Orientierung korrekt ist, mit Hilfe einer von den Erfassungsmitteln (1, 10) aufgenommenen Sicht der Zone (12), die vom Laserpointer (9) bezeichnet wird;
Erfassen des Energiespektrums der Gammastrahlung, die von der derart lokalisierten Gammastrahlenquelle (2) emittiert wird, mit Hilfe des Gammaspektrometriedetektors (7).
